(19) Europäisches Patentamt European Patent Office Office européen des brevets

(11) **EP 4 549 877 A1**

(12) **EUROPEAN PATENT APPLICATION**

(43) Date of publication:
07.05.2025   Bulletin 2025/19

(21) Application number: 23206643.1

(22) Date of filing: 30.10.2023

(51) International Patent Classification (IPC):
***G01B 21/32*** *(2006.01)*

(52) Cooperative Patent Classification (CPC):
**G01B 21/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Geoprojekt d.d.**
**21000 Split (HR)**

(72) Inventor: **SAFRAN, Tomislav**
**10000 Zagreb (HR)**

(74) Representative: **Hadzija, Tomislav**
**BCI - Business Center International**
**1st Floor**
**Miramarska cesta 24**
**10000 Zagreb (HR)**

(54) **DEVICE FOR MEASURING DEFLECTION IN THE PAVEMENT STRUCTURE AND CONTINUOUS MONITORING OF THE BEHAVIOR OF THE PAVEMENT STRUCTURE UNDER LOAD**

(57)    A device for measuring deflection in pavement construction, which consists of an upper housing made of hard plastic and in which an electronic printed circuit board with a processor, memory, communication module for sending data via NB-IoT (Narrowband Internet of Things) or a standard mobile network is installed, and the lower housing, which is made of metal and houses a sensor - a digital accelerometer with a built-in gyroscope function, which measures G forces at a frequency of up to 1000 Hertz, or more, depending on the model, installation depth and specific needs on a particular road.

**Fig. 1**

## Description

## Technical field

This invention relates to the area of deflection measurement in pavement construction, i.e. sensors for measuring the behaviour of pavement construction under load.

The subject invention can be generally classified according to the IPC in class G01L 1/00 which refers to devices for measuring elastic or plastic (irreversible) deformation and G01P 15/00 which includes the measurement of acceleration and G force.

## Description of the state of the art

Roads usually consist of several layers, the most common of which is asphalt, i.e. the wearing layer on which vehicles drive. In addition to asphalt, the upper wear layer can also be made of concrete, when dealing with roads older than 40-50 years, or when dealing with remote locations where hot asphalt cannot be delivered for installation. Underneath the asphalt is a load-bearing structure, which is actually compacted bound or unbound stone aggregate with an average thickness of 20 to 50 centimetres.

As most of the roads in the world have already been built, and as the focus shifts to the maintenance of transport infrastructure, the costs and funds invested in rehabilitation, reconstruction and renovation of roads also increase. In order to be able to access the mentioned works, the planners must first create specific projects based on which the contractors will perform the works. In order for the planners to be able to define the method and extent of renovation, reconstruction or rehabilitation, field investigations and material tests must be carried out in the field and in the laboratory with an assessment of the bearing capacity of the existing pavement structure, either by destructive or non-destructive methods, or a combination of both.

Among the destructive methods are examination tests, and one of the tests that is usually carried out is the test of the load-bearing pavement structure and subgrade, in such a way that the upper layer of asphalt is cut, and then the stone aggregate is dug up with an excavator (as a universal construction machine) in order to dynamically test the bearing capacity of the bedding at the bottom of the excavated trench with a plate, that is, to determine the modulus of elasticity. The values required for specific traffic loads are already known, so by determining various parameters (removal of a layer of clay or other inadequate material, installation of drainage, determination of the type and quality of the material for the mechanically compacted layer, as well as its thickness, etc.), the road can be dimensioned as would bear greater loads and a greater amount of traffic, and so that the road would be designed for a longer service life. The fact is that the aforementioned tests are expensive, that for their implementation it is necessary to establish traffic regulation and limit the flow and safe flow of traffic in parallel with the execution of excavation construction works and excavation rehabilitation, in order to obtain information that is valid only at the time of the test, and is not take into account the possibility of the influence of different conditions throughout the year, of which the influence of temperature and humidity, which significantly change in the pavement structure throughout the year, is particularly significant.

"Falling Weight Deflectometer" device, which simulates the traffic load of heavy vehicles (trucks) and measures the elasticity of the load-bearing layers of the pavement structure, from which the bearing capacity can be calculated, that is, with a higher frequency of testing, parts of the road that need to be strengthened can be found in order to handle the expected traffic. There are also significant limitations when applying this non-destructive procedure, which has the advantage of high speed of measurement implementation. The most important thing is that the deflections in the pavement structure are calculated by indirect measurement of the return sound wave from the surface of the pavement, and not by direct measurement in the pavement structure itself, nor in the different layers of the pavement structure independently (for the sake of clarification, the deflection of the pavement structure is a deformation in the form of bending that occurs under by the action of a certain load). Then, the fact is that the deflections with this procedure are measured under a fixed load, only at a given moment, and not under the actual load of different vehicles over a continuous period of time. In addition, the actual number of vehicle that pass of real mass/load is not taken into account either. An additional limitation is that this procedure, even though it is essentially non-destructive, still requires, albeit at a lower frequency, the implementation of sounding excavations and the determination of the actual thickness of the layers for calibration purposes. Finally, the Falling Weight Deflectometer measuring device also requires parallel measurement of the thickness of the layers by Georadar (Ground Penetrating Radar), which all together means the use of very expensive measuring systems that are very rare and limitedly available to designers.

As a very effective, precise and easily accessible alternative for a wide range of applications, to a good extent, the above data needed for the development of road strengthening, reconstruction, renovation and rehabilitation projects could be obtained by installing sensors that would measure the impact of heavy vehicles on the boundary between the mechanically compacted bearing layer and the bedding within road constructions; if the sensor were to read large elastic displacements, it would mean that the mechanically compacted bearing layer cannot withstand the current loads, and if plastic, i.e. permanent deformations occur, it could mean the deterioration of the bed, or a combination of too weak or not sufficiently thick mechanically compact bearing layer, asphalt layer and poor bedding that does not have sufficient bearing capacity. Such deterioration would also be visible on the surface of the road in the form of potholes and depressions, and further unrestricted traffic would lead to a significant progression of deformations and a complete collapse of the pavement structure in the end. After installation, the sensors could record and send data for several months, even several years, in order to gather enough information for the dimensioning of the future road, that is, to dispose of public funds for road renovation in an efficient and socially responsible manner. It is estimated that the sensors could bring savings of up to 50% compared to classic destructive and non-destructive methods of measuring the bearing capacity of pavement structures, but in the long term they could also bring great savings to public companies that manage and maintain public roads with funds collected from direct taxes and excise duties, because significantly loaded roads could be designed to withstand such loads for the designed term, i.e. roads that no longer suffer heavy loads no longer need to have expensive layers of pavement construction, but can be designed for a lower load capacity, i.e. renovated with a significantly smaller scope of works, thinner asphalt layers and shallow penetration into the restoration of bearing layers, and in most cases the technology of pavement restoration by recycling could also be applied.

These measurements are extremely important considering the increase in standards in society, and thus the increase in the consumption of goods that are transported by trucks. Depending on the quality of the pavement construction, studies have shown that one loaded tow truck or construction material transport truck damages the road as the passage of 10,000 to 80,000 passenger cars. Therefore, the detection of overloaded trucks in traffic is of significant interest for public bodies that manage roads (state, local, highways), in order to detect and prevent such phenomena, because the consequences are significant damage and expensive repairs, and precisely the sensor for the behaviour of the pavement structure under load can do just that - detect vehicle loads that are greater than the designed bearing capacity of the pavement structure, resulting in large elastic or permanent plastic deformations of the pavement structure. In the event that the sensor is used for this purpose, after the installation of such sensor systems on a certain road , a vehicle with the highest permissible mass, i.e. axle load, and a vehicle that is overloaded pass over the mentioned sensors, and then the deformations for both vehicles and their differences are set from the readings limit values of acceleration that represent vehicles with a larger mass than the maximum allowed, and then the sensors are able to send information on their own in the event of the passage of such a vehicle.

The field of application of the sensor is shown in the existing patent application for measuring the behaviour of the pavement structure under load is very specific and of high professional application. Tests of the bearing capacity of the pavement structure are carried out by specialized construction laboratories and institutes using equipment that has not significantly advanced since the 1980s; these are dynamic and static panels, Falling Weight Deflectometer, and indirect tests of physical-mechanical properties in the laboratory, where the quality and load-bearing capacity of the pavement structure can be assessed based on the obtained results.

Notwithstanding the applicant's entire understanding, the following patent applications are considered to be close to the prior art.

CN105064187A - Sensor for continuous monitoring of vertical deformations of asphalt pavement based on optical fibre sensor technology.

This invention relates to a sensor for continuous monitoring of vertical deformations of asphalt pavement based on optical fibre sensor technology. Sensor for continuous tracking vertical deformations asphalt roadway it is characterized by being a sensor for continuous tracking vertical deformations asphalt roadway placed on the lower part of the asphalt roadway that is needed to detect damage, and then directly performs paving and rolling roads.

US11474013B2 - Cyclic rolling fatigue testing platform for asphalt ductility determination.

This one invention reveals the performance test on fatigue and induces busy analogously surroundings stresses and deformation of 60 cycles in transverse cut roadway through rolling platform cyclical fatigue. Data from encounter dynamics reveal where stress build-up occurs well before external, visually visible evidence of fatigue failure due to cracking or permanent deformation appears in the pavement specimen. Appropriate adjustment built-in sensor firmware establishes base status for the sample after what incoming data collected during dynamic meeting stresses and stresses that reveal details of accumulation of fatigue. For the purpose of clarification, ductility is a property of a material to bear deformation without breaking. The bigger the deformation a material is capable to bear without fragile breakage the more ductile it is.

The invention disclosed in the existing patent application is obviously different from related inventions known in the state of the art, because the lower sensor is of small dimensions, almost the size of the stone aggregate that surrounds it in the road (dimensions approx. 55x22mm), and measures acceleration along all axes (XYZ), and not only vertically, which is the case with inventions from the state of the art. Furthermore, the installation is simpler, as it requires drilling a hole in the asphalt surface with a diameter of approx. 10 centimetres, after which a hole with a diameter of approx. 20-30 mm is drilled in the mechanically compacted layer with an ordinary drill, after which the lower sensor is driven into the required depth to the boundary of the mechanically compacted bearing layer and the bedding. The sensor described in the existing patent application is intended for dense installation in the road, depending on the configuration and observed damage on the surface, the engineers determine the installation locations, on average one sensor for every 50 meters of the road, or about 20 sensors for every kilometre. The anticipated price of installing one sensor is from 150 to 200 euros, with a special fee for data processing and report creation, depending on the required duration. If necessary, the upper housing on the asphalt surface can be opened to replace the electronic components or the battery. According to the latest information, the current Infratest sensor is on the market, however, the price of one Infratest sensor that measures only vertical acceleration is from 15,000 to 25,000 EUR with installation, so these two devices cannot be compared. Infratest's device primarily serves to record temperatures at 6 points, with cylindrical device dimensions of 60 mm in diameter and 270 mm in height. The device from the described invention in this patent application primarily measures accelerations from which it calculates G forces, and from which the software calculates deflections or displacements (which Infratest's device does not do, and cannot do due to the characteristics of the device itself), in addition, the described sensor in one of version can also measure temperatures in the pavement structure.

Another important difference with sensors known in the state of the art is that in the sensor described in this patent application there is a computer that can independently process the measured data in software and send to the network only those that are the subject of interest, i.e. analysis (critical deformations, overloaded vehicles, passing vehicles ) and in addition it completely independently measures the behaviour of the asphalt layers of the pavement structure and the unbound bearing layers under the asphalt.

Other similar inventions from the state of the art known in the scope of the specific application are not known to the applicant of this application, although it must be noted that there are expensive devices on the market that under certain conditions can be used to measure exclusively vertical acceleration only in asphalt layers in the road, such as the Core Interface device produced by the company Infratest

## Summary of the invention

The invention disclosed in this patent application relates to a device consisting of two components, an upper and a lower housing; in the upper one, an electronic printed circuit board with a processor unit, power supply, communication modules and a replaceable battery is located - and as such it is installed in the surface layers of the pavement structure (within the asphalt), while a sensor is placed in the so-called lower housing - an accelerometer, which measures G forces, which are then converted into deflections using mathematical formulas - the lower housing is installed in the load-bearing pavement structure at a depth of 40-60 centimetres below the road surface.

A sensor for measuring the behaviour of the pavement structure under load, which is installed so that the lower part of the sensor is installed at the depth where there is a junction of the mechanically compacted bearing layer (most often unbound stone material) and the bed (the surface of the earth cleaned of the humus layer on which the road is built), in order to measure elastic or plastic (irreversible) deformations during the predicted period under real traffic load in a longer continuous period of time, which can be more than a year. After installation, the sensor measures G forces, and a special program located in the memory of the control unit in the sensor, or a program that processes the data sent to the server and saved in the database, converts the obtained values into displacements, i.e. elastic or plastic deformations based on which the engineers who deal with deflection calculations, they can conclude whether the changes and deflections are within the permissible limits, or deviate and indicate certain changes that will result in damage to the pavement structure.

## Short description of the figures

In addition to the description of the technical solution, and for a better understanding of the features of the invention, in accordance with the below-mentioned explanation of the practical implementation of the invention, the following images are attached:

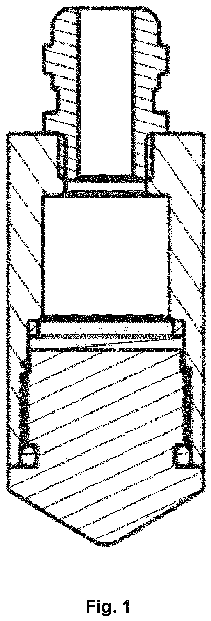

Fig. 1 - Layout of the lower sensor

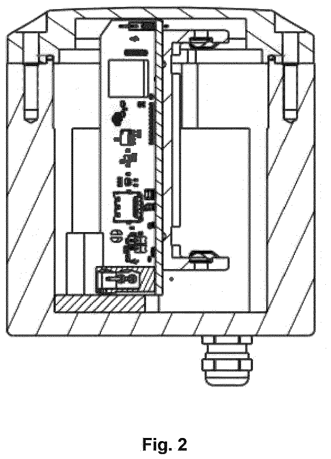

Fig. 2 - Appearance of the case

## Detailed description of the invention

The device consists of two housings; in the lower, metal case there is a digital accelerometer with a built-in gyroscope function, which measures G forces at a frequency of up to 1000 Hertz, or more, depending on the model, installation depth and specific needs on a particular road. The installation depth is usually 40-70 centimetres from the surface of the asphalt, that is, it is installed at the border of the mechanically compacted layer of the pavement structure and the bed (the soil layer on which the road is built). It is connected to the upper case with a cable through which it receives power and sends data.

The upper case is made of hard plastic, and an electronic printed circuit board with a processor, memory, communication module for sending data via NB-IoT (Narrowband Internet of Things) or a standard mobile network is installed in it. Control software is installed in it, which can be adjusted remotely, by sending commands, in such a way as to determine the density of recording and sending data, that is, the minimum and maximum limits of the recorded acceleration forces can be determined, which will be sent to the server or directly to the user. These commands can be used to determine the frequency of sending data, for example for the device to select the 100 largest forces from the 4,000 recorded acceleration forces, and to send them to the server at these intervals, or once a day, weekly or similar, depending on the traffic density and the recorded forces. The processing of the measured acceleration data and the calculation of displacement can be carried out on the sensor itself or the data is processed on a server that collects data from the entire system of embedded sensors on a road. Calculation of data on vertical deflections is carried out on the basis of measured accelerations in two iterations according to the following formulas:

$$v_c(i) = v_c(i-1) + \frac{a(i-1) + a(i)}{2} \Delta t$$

$$d_c(i) = d_c(i-1) + \frac{v(i-1) + v(i)}{2} \Delta t$$

Where a (i) is the measured acceleration, and vc (i) the calculated speed, or dc (i) the calculated deformation. The deformation is therefore obtained by double integration based on the measured acceleration.

**Claims**

1. The device for measuring deflection in the pavement structure is **characterized by** the fact that it consists of:

    - the upper case, which is made of hard plastic and in which an electronic printed circuit board with a processor, memory, communication module for sending data via NB-IoT (Narrowband Internet of Things) or a standard mobile network is installed, and
    - the lower housing, which is made of metal and houses the sensor - a digital accelerometer with a built-in gyroscope function, which measures G forces at a frequency of up to 1000 Hertz, or more, depending on the model, installation depth and specific needs on a particular road,

    whereby the lower case is connected to the upper case with a cable through which it receives power and sends data.

2. Device according to claim 1, **characterized by** the fact that the upper housing is installed in the surface layers of the pavement structure (within the asphalt), while the lower housing is installed in the load-bearing pavement structure at a depth of 40-70 centimetres from the asphalt surface, i.e. it is installed on the boundaries of the mechanically compacted layer of the pavement structure and the bed, the soil layer on which the road is built.

3. The device according to patent claim 1, **characterized by** the fact that the specified sensor for measuring the behaviour of the pavement structure under load is installed so that the lower part of the sensor is installed at the depth where the junction of the mechanically compacted bearing layer (most often unbound stone material) and the bed is located (the surface of the earth cleared of the humus layer on which the road is being built), in order to measure elastic or plastic (irreversible) deformations during the predicted period under real traffic load in a longer continuous period of time, which can be more than a year.

4. Device according to patent claim 3, **characterized by** the fact that the specified sensor measures G forces after installation, and a special program located in the memory of the control unit in the sensor, or a program that processes data sent to the server and saved in the database, recalculates the obtained values in displacements, that is, elastic or plastic deformations, based on the calculation of deflection, it can be concluded whether the changes and deflections are within the permissible limits, or deviate and indicate certain changes that will result in damage to the pavement structure.

5. Device according to patent claims 3 and 4, **characterized by** the fact that the processing of measured acceleration data and the calculation of displacement is carried out on the specified sensor itself or the data is processed on a server that collects data from the entire system of built-in sensors on a certain road, while the calculation of data on vertical deflections is carried out on the basis of measured accelerations in two iterations according to the following formulas:

$$v_c(i) = v_c(i-1) + \frac{a(i-1) + a(i)}{2} \Delta t$$

$$d_c(i) = d_c(i-1) + \frac{v(i-1) + v(i)}{2} \Delta t$$

where a (i) is the measured acceleration, and vc (i) is the calculated speed, or dc (i) is the calculated deformation. The deformation is therefore obtained by double integration based on the measured acceleration.

6. Device according to patent claim 1, **characterized by** the fact that control software is installed in the upper housing that can be adjusted remotely, by sending commands, in such a way as to determine the density of recording and sending data, that is, the minimum and maximum limits of the recorded acceleration forces can be determined, which will be sent to the server or directly to the user, whereby the frequency of sending data can be determined with these commands, for example, for the device to select the 100 largest forces from the 4,000 recorded acceleration forces, and to send them to the server at these intervals, or once daily, weekly or similar, depending on traffic density and recorded forces.

**Fig. 1**

**Fig. 2**

Europäisches
Patentamt

European
Patent Office

Office européen
des brevets

# EUROPEAN SEARCH REPORT

Application Number

EP 23 20 6643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/155362 A1 (TENSAR INT CORPORATION [US]) 5 August 2021 (2021-08-05) * paragraphs [0006], [0038], [0040] - [0044], [0048] - [0052], [0059], [0069], [0086]; figures 1-3,22A,22B,23 * | 1-6 | INV. G01B21/32 |
| X | WO 2023/009889 A1 (TENSAR INT CORPORATION [US]) 2 February 2023 (2023-02-02) * paragraphs [0039], [0066]; figures 3,3A,4A,4B,4C,4D,10 * | 1-6 | |
| A | FIORITA ANDREA ET AL: "The Development of an IoT In-Road Sensing Device for Pavement Health Monitoring", 2023 IEEE 26TH INTERNATIONAL CONFERENCE ON INTELLIGENT TRANSPORTATION SYSTEMS (ITSC), IEEE, 24 September 2023 (2023-09-24), pages 3673-3679, XP034544085, DOI: 10.1109/ITSC57777.2023.10421961 [retrieved on 2024-02-13] * chapter B.2 * | 1,4,5 | |
| A | PARK BYUNGSU ET AL: "Response characteristics of a MEMS resonant accelerometer to external acoustic excitation", 2016 IEEE SENSORS, IEEE, 30 October 2016 (2016-10-30), pages 1-3, XP033036996, DOI: 10.1109/ICSENS.2016.7808717 [retrieved on 2017-01-05] * chapter III.B., IV.; figure 5 * | 1 | TECHNICAL FIELDS SEARCHED (IPC) G01B G01M E01C |

The present search report has been drawn up for all claims

| Place of search | Date of completion of the search | Examiner |
|---|---|---|
| Munich | 19 March 2024 | Biedermann, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 6643

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2024

| Patent document cited in search report | | Publication date | Patent family member(s) | | Publication date |
|---|---|---|---|---|---|
| WO 2021155362 | A1 | 05-08-2021 | AU | 2021213831 A1 | 22-09-2022 |
| | | | AU | 2021213832 A1 | 22-09-2022 |
| | | | AU | 2021214243 A1 | 22-09-2022 |
| | | | CA | 3169615 A1 | 05-08-2021 |
| | | | CN | 115335674 A | 11-11-2022 |
| | | | CN | 115413318 A | 29-11-2022 |
| | | | CN | 115485534 A | 16-12-2022 |
| | | | CO | 2022010758 A2 | 31-10-2022 |
| | | | EP | 4097435 A1 | 07-12-2022 |
| | | | EP | 4097436 A1 | 07-12-2022 |
| | | | EP | 4097437 A1 | 07-12-2022 |
| | | | JP | 2023512248 A | 24-03-2023 |
| | | | KR | 20220129634 A | 23-09-2022 |
| | | | PE | 20221772 A1 | 16-11-2022 |
| | | | US | 2023049699 A1 | 16-02-2023 |
| | | | US | 2023056132 A1 | 23-02-2023 |
| | | | US | 2023056156 A1 | 23-02-2023 |
| | | | WO | 2021155358 A1 | 05-08-2021 |
| | | | WO | 2021155362 A1 | 05-08-2021 |
| | | | WO | 2021155364 A1 | 05-08-2021 |
| | | | ZA | 202208849 B | 25-10-2023 |
| WO 2023009889 | A1 | 02-02-2023 | AU | 2022317553 A1 | 15-02-2024 |
| | | | CA | 3227378 A1 | 02-02-2023 |
| | | | WO | 2023009889 A1 | 02-02-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105064187 A

- US 11474013 B2